# EUROPÄISCHE PATENTSCHRIFT

(11) **EP 0 579 063 B1**
(45) Veröffentlichungstag und Bekanntmachung des Hinweises auf die Patenterteilung: **29.01.1997**
(21) Anmeldenummer: 93110649.6
(22) Anmeldetag: 03.07.1993
(51) Int. Cl.: C04B 28/06

(54) **Schnellhärtendes hydraulisches Bindemittel**
Rapid-setting hydraulic binder
Liant hydraulique à prise rapide

(30) Priorität: 17.07.1992 DE 4223494
(43) Veröffentlichungstag der Anmeldung: 19.01.1994
(73) Patentinhaber: Heidelberger Zement AG, D-69120 Heidelberg (DE)
(72) Erfinder: Unsin, Joachim, D-69115 Heidelberg (DE)
(74) Vertreter: Schmid, Rudolf, Dipl.-Ing., Patentanwalt

(56) Entgegenhaltungen:
- EP-A- 0 211 365
- EP-A- 0 228 595
- GB-A- 2 162 506
- CHEMICAL ABSTRACTS, vol. 114, no. 26, 1. Juli 1991, Columbus, Ohio, US; abstract no. 252831a, & JP-A-02 302 351 (MITSUBISHI MINING AND CEMENT CO.) 14. Dezember 1990
- DATABASE WPIL Week 8640, Derwent Publications Ltd., London, GB; AN 86-262615 & JP-A-61 191 552 (NIPPON OILS & FATS K. K.) 26. August 1986
- DATABASE WPI Week 8931, Derwent Publications Ltd., London, GB; AN 89-227610 & ZA-A-8 806 123 (STRATA CONTROLS SYS.) 26. April 1989
- V.S RAMACHANDRAN 'CONCRETE ADMIXTURES HANDBOOK : Properties, Science, and Technology' , NOYES PUBLICATIONS , PARK RIDGE, US

## Beschreibung

Die Erfindung betrifft ein schnellerhärtendes, hydraulisches Bindemittel, enthaltend Calciumsilikatzemente, insbesondere Portlandzement, reaktive Calciumaluminate insbesondere Tonerdezement sowie gegebenenfalls an sich bekannte Zusatzstoffe und/oder Zuschläge im Sinne der Begriffsbestimmung nach DIN 1045 und DIN 4226.

Zu den Zusatzmitteln und -stoffen gehören beispielsweise Mittel zur Verbesserung der Verarbeitbarkeit, Luftporenbildner, Verflüssiger, Haftverbesserer, Pigmente, Dichtungsmittel und dergleichen.
Zuschläge für aus dem erfindungsgemäßen schnellerhärtenden hydraulischen Bindemittel hergestellte Beton- oder Mörtelmischungen können beispielsweise Gesteinsmehl, Traß, Flugasche, Silicastaub und dergleichen sein.

Es sind zahlreiche Zusammensetzungen bekannt, die Tonerdezement und Portlandzement enthalten und als schnellabbindende Mischungen zum Einsatz gelangen.

Im einzelnen ist zum Stand der Technik folgendes auszuführen:

Es ist beispielsweise der US-PS 4,012,264 zu entnehmen, daß ein sehr schnell abbindender und erhärtender Zement durch Vermischen von Portlandzement und Tonerdezement hergestellt werden kann, gegebenenfalls unter Verwendung von verschiedenen Beschleunigern; es ist weiterhin eine Calciumaluminat- und Portlandzementzusammensetzung beschrieben, die Verzögerer und/oder Beschleuniger enthält.

Tonerdezement wurde auch schon gebranntem Gips oder Anhydrit-Gips zugesetzt, um festere Formen und Güsse zu erhalten; siehe z. B. T. D. Robson, High Alumina Cements and Concretes, John Wiley & Sons, N. Y., 1962; auf den Seiten 126 - 127 dieser Literaturstelle ist erwähnt, daß Lithiumsalze als Beschleuniger für Tonerdezement geeignet sind.

Es hat sich jedoch herausgestellt, daß Zusammensetzungen, die Tonerdezement, Gips und Lithiumsalze als Beschleuniger enthalten, für sich allein eine übermäßige Schwindung und Naßexpansion in erhärtendem Zustand zeigen.

Aus der EP-PS 0 228 595 ist eine schnellerhärtende Bindemittelmischung, enthaltend Portlandzementklinker, reaktive Calciumaluminate und/oder Tonerdezement, reaktives Calciumsulfat, einen organischen Abbindeverzögerer sowie Alkalicarbonat,bekannt.

Bei dieser Bindemittelmischung ergibt sich eine sehr steile Erstarrungscharakteristik nach Beendigung der Topfzeit mit sehr hohen Frühfestigkeiten und hohen Endfestigkeiten.

Der Nachteil dieses Bindemittels liegt in den strengen bzw. einengenden Anforderungen bezüglich der Auswahl der Ausgangsstoffe.
Als Hauptkomponente wird nämlich nicht handelsüblicher Portlandzement, sondern gemahlener Portlandzementklinker unter Zusatz einer limitierten Calciumsulfatmenge eingesetzt.

Die EP-PS 0 211 362 beschreibt eine Mischung zur Herstellung schnellerhärtender Mörtel , die Bindemittel sowie übliche Zuschläge und Zusätze enthält. Aus dieser Trockenmörtelmischung läßt sich durch Zumischen von Anmachwasser ein schnellerhärtender Mörtel herstellen, der zum rißfreien Verfüllen von Ausbrüchen in Altbeton und zum rißfreien Beschichten grober Flickstellen geeignet ist.

Die EP-PS 0 211 365 offenbart einen Schnellzement, der reaktive Calciumsilikate und reaktive Aluminate enthält und der eine sehr schnelle Erstarrung mit hoher Frühfestigkeit, jedoch verhältnismäßig geringer Endfestigkeit, aufweist.

Ferner wird durch die EP-PS 0 213 390 eine Mörtelmischung beschrieben, die neben üblichen Zuschlägen und Zusätzen reaktive Calciumsilikate, reaktive Aluminate, Calciumhydroxid, Calciumsulfathydrat, Calciumsulfatanhydrit-II und organischen Abbindeverzögerer enthält, wobei eine Erhöhung der Menge an reaktiven Aluminaten eine Erhöhung der Früh- und Endfestigkeit bewirkt, eine Maßnahme, die jedoch zu einer erheblichen Erhöhung der Materialkosten führt.

Im Hinblick auf den Gehalt an reaktiven Calciumaluminaten bzw. Tonerdezement in schnellerhärtenden Bindemittelmischungen des vorliegenden Typs, zeigen die angeführten Patentschriften, daß die Fachwelt Anteile von mindestens 5 Masse-%, üblicherweise erheblich höhere Anteile eines modellhaften Tonerdezementes mit 50 % Al₂O₃-Gehalt, für unabdingbar hält.
Bei der Entwicklung des erfindungsgemäßen, schnellerhärtenden Bindemittels hat es sich überraschenderweise gezeigt, daß eine Verringerung des Gehaltes an Tonerdezement unter diesen Wert zu einer deutlichen Verbesserung der Druckfestigkeitsentwicklung führt bei nur geringer Verminderung der Frühfestigkeit.

Vorliegender Erfindung liegt nun die Aufgabe zugrunde, durch Auswählen einer bestimmten Formulierung der Zusammensetzung ein schnellhärtendes, hydraulisches Bindemittel herzustellen, das die Nachteile der vorstehend beschriebenen, schnellerhärtenden Bindemittel des Standes der Technik unter Erreichen von Vorteilen nicht aufweist.

Diese Aufgabe wird bei einem schnellerhärtenden, hydraulischen Bindemittel der eingangs genannten Gattung dadurch gelöst, daß das erfindungsgemäße Bindemittel durch einen Gehalt an:
a) 0,1 bis 2,0 Masse-% eines organischen und/oder anorganischen Beschleunigers für die Hydratation der Calciumsilikate,
b) 0,10 bis 2,00 Masse-% eines organischen und/oder anorganischen, die Hydratation der Calciumsilikate hemmenden Erstarrungsverzögerers, gegebenenfalls mit verflüssigender Wirkung,
c) 0,01 bis 0,05 Masse-% eines organischen und/oder anorganischen Erstarrungsbeschleunigers für Calciumaluminathydrate und
d) 0,01 bis 0,20 Masse-% eines Hemmers bezüglich der Bildung der Calciumaluminiumsulfathydrate, gekennzeichnet ist.

Das erfindungsgemäße, schnellhärtende Bindemittel ist beispielsweise durch den besonderen Vorteil gekennzeichnet, daß es bei Einsatz geringstmöglicher Anteile von Tonerdezement einerseits, sowie handelsüblichem Portlandzement andererseits, sowohl hohe Frühfestigkeit als auch hohe, für Portlandzement typische, Festigkeitszuwächse aufweist.
Weitere Vorteile werden im folgenden angegeben:
Die Basis für die Ausgangsstoffe zur Herstellung des erfindungsgemäßen, schnellerhärtenden Bindemittels ist wesentlich breiter, da über das übliche Maß hinausgehende Anforderungen an die eingesetzten Portlandzemente und Tonerdezemente nicht gestellt werden.
Durch Verwendung von Calciumsilikatzementen, insbesondere von Portlandzementen verschiedener Festigkeitsklassen, kann die zu erreichende Druckfestigkeit des erfindungsgemäßen schnellerhärtenden, Bindemittels dem jeweiligen Anwendungszweck entsprechend eingestellt werden.
Durch die erhebliche Verminderung des Gehaltes an Tonerdezement im erfindungsgemäßen, schnellerhärtenden Bindemittel wird eine bedeutende Senkung der Materialkosten erreicht.
Während handelsüblicher Schnellzement der Gattung Portlandzement/Tonerdezement erfahrungsgemäß beim Kontakt mit Luft bereits innerhalb weniger Stunden eine deutliche Verlängerung der Erstarrungszeiten nach dem Anmachen mit Wasser erfährt, weist das erfindungsgemäße, schnellerhärtende Bindemittel bezüglich dieses Punktes eine bemerkenswerte Unempfindlichkeit auf. Durch niedrige Material- und Umgebungstemperaturen wird die Erstarrungszeit des erfindungsgemäßen schnellerhärtenden Bindemittels wenig verlängert.

Im folgenden werden anhand von Diagrammen und Tabellen Ausführungsbeispiele bzw. Versuchsergebnisse dargestellt.

### Erfindungsgemäßes Beispiel 1

Es wurden vier schnellhärtende Bindemittel des Portlandzement/Tonerdezement-Systems nach der folgenden Rezeptur hergestellt, die sich nur insoweit unterschieden, daß vier Portlandzemente aus vier verschiedenen Herstellwerken eingesetzt wurden:
- 92,45: Masse-% Portlandzement
- 4,7: Masse-% Tonerdezement
- 0,5: Natriumcarbonat als Silikatbeschleuniger
- 0,3: Natriumsulfat
- 1,6: Calciumhydroxid
- 0,05: Lithiumcarbonat als Beschleuniger für Aluminate
- 0,20: KNa-tartrat als Verzögerer für Aluminate
- 0,20: Calcium-Ligninsulfonat als Silikatverzögerer

In der Tabelle 1 sind die an Normmörtel nach EN 196 bei 20°C mit W/Z-Wert 0,50 ermittelten Druckfestigkeiten und Erstarrungszeiten sowie die Ausbreitmaße angegeben. Für das schnellhärtende Bindemittel Version 1 ist zusätzlich noch die Druckfestigkeitsentwicklung bis 48 Stunden bei 5°C angegeben.

Zum Vergleich sind die 20°C-Werte auch für ein schnellhärtendes Bindemittel mit höherem Tonerdezement-Gehalt und der folgenden Rezeptur angegeben:

### Nicht erfindungsgemäßes Vergleichsbeispiel Nr. 2

- 78,8: Masse-% Portlandzement
- 15,0: Masse-% Tonerdezement
- 2,0: Natriumcarbonat
- 1,0: Natriumsulfat
- 3,0: Calciumhydroxid
- 0,05: Lithiumcarbonat
- 0,05: KNa-tartrat
- 0,10: Calcium-Ligninsulfonat

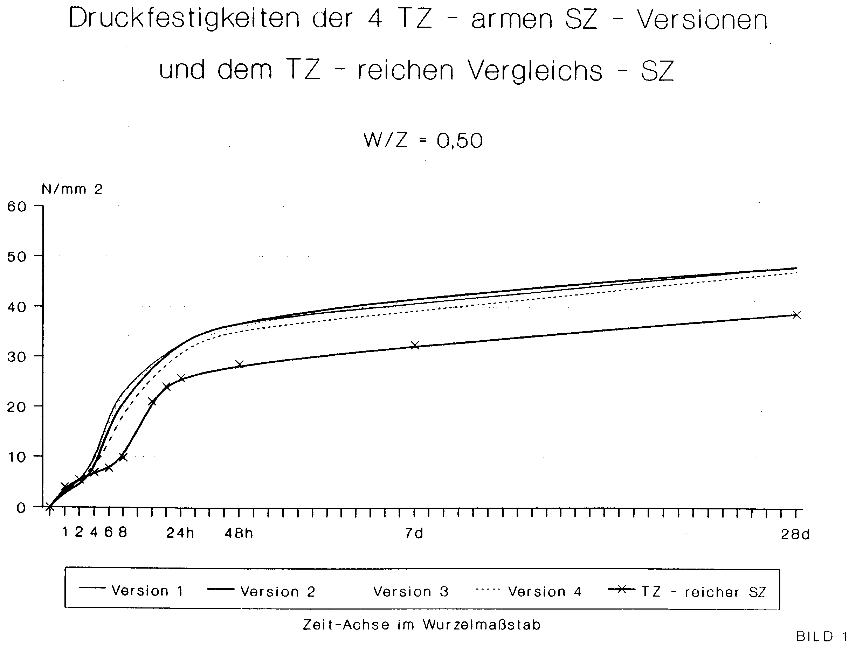

Bild 1 zeigt die Druckfestigkeitsentwicklung der vier schnellhärtenden Bindemittel mit 4,7 % Tonerdezement und der Mischung mit 15 % Tonerdezement im Vergleich bei W/Z-Wert 0,50 an Normenmörtel n. DIN 1164. Tabelle 1 faßt die dazugehörenden Werte zusammen.

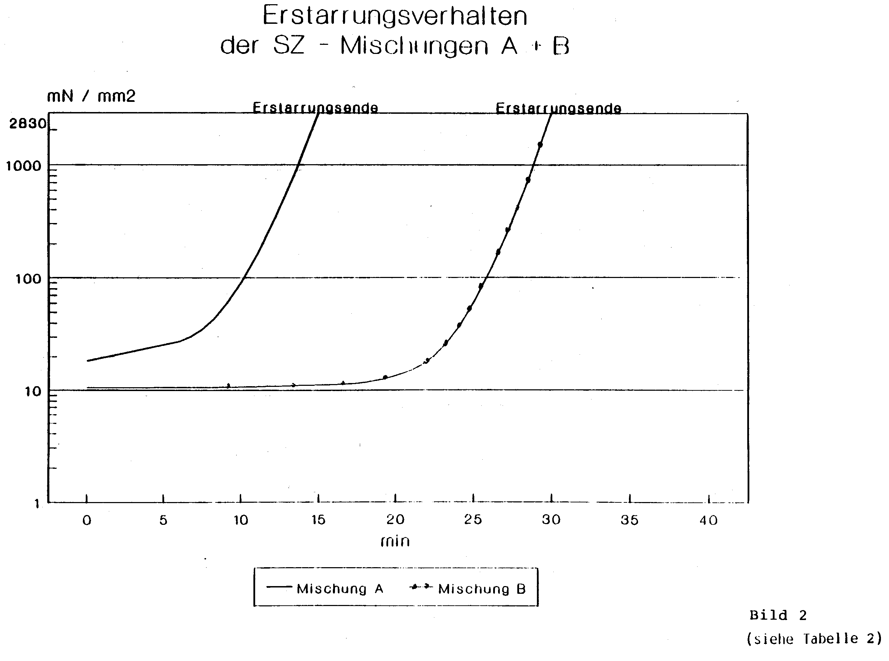

Bild 2 zeigt die Regelbarkeit der Erstarrungszeit an zwei erfindungsgemäßen Bindemitteln A und B. Die dazugehörenden Daten sind in Tabelle 2 aufgeführt.

Im folgenden wird der Einfluß des Auslagerns auf die Erstarrungszeit erörtert:

Die vier Tonerdezement-armen schnellhärtenden Bindemittel-Versionen wurden in 3 mm-dünner Schicht 24 Stunden lang an der Luft bei 23°C Raumtemperatur und 45 % rel. Luftfeuchte ausgebreitet. Nach 1, 2, 8 und 24 Stunden an Leimproben mit W/Z-Wert 0,35 das Erstarren geprüft.

Als Vergleichsprobe wurde auf die gleiche Weise ein handelsüblicher Schnellzement auf Portlandzement/Tonerdezement-Basis geprüft.

### Ergebnisse:

| Schnellhärtende Bindemittel-Proben | Erstarrungsende in Minuten | | | | |
|---|---|---|---|---|---|
| | 0-Probe | nach 24 Stunden | | | |
| | | 1 | 2 | 8 | 24 |
| Version 1 | 7 | 7 | 7 | 6 | 6 |
| Version 2 | 5 | 6 | 5 | 5 | 5 |
| Version 3 | 8 | 7 | 8 | 7 | 6 |
| Version 4 | 12 | 11 | 10 | 11 | 9 |
| Handelsüblicher Schnellzement auf Basis Portlandzement/Tonerdezement | 20 | 42 | 75 | 110 | 165 |

Es zeigt sich hier, daß der erfindungsgemäße tonerdezementarme Schnellzement mit 4,7 % Tonerdezement durch die eintägige Luftlagerung praktisch keine Veränderung, bzw. zum Teil eine leichte Verkürzung des Erstarrens erfährt. Der handelsübliche Schnellzement auf Portlandzement/Tonerdezement-Basis zeigt dagegen nachteiligerweise eine rasch einsetzende, erhebliche Verlängerung der Erstarrungszeit von 20 Minuten beim frischen Zement auf fast 3 Stunden nach 1-tägiger Auslagerung .

### Druckfestigkeiten nach EN 196 der 4 SZ - Versionen

**Tabelle 1**

| (gehört zu Bild 1) | | | | | |
|---|---|---|---|---|---|
| | TZ -arme SZ -Versionen ( 4,7 % ) | | | | Vergleichs - SZ ( 15 % TZ ) |
| SZ - Version | - 1 - | - 2 - | - 3 - | - 4 - | |
| PZ | TYP 1 | TYP 2 | TYP 3 | TYP 4 | TYP 2 |
| PZ/TZ | 95 / 5 | 95 / 5 | 95 / 5 | 95 / 5 | 84 / 16 |
| W / Z | 0,50 | 0,50 | 0,50 | 0,50 | 0,50 |
| Ausbreitmaß ( cm ) | 15,4 | 14,2 | 15,9 | 14,3 | |

| Erstarren(DIN 1164/Mörtel) | | | | | |
|---|---|---|---|---|---|
| A | 11 min | 14 min | 7 min | 14 min | 15 min |
| E | 13 min | 16 min | 10 min | 17 min | 18 min |
| Druckfestigkeiten in N/mm2 | 20 C / 5 C | | | | |
| 1 h | 3,0 / 2,4 | 3,1 | 3,6 | 2,8 | 4,0 |
| 2 h | 5,0 / 3,0 | 4,1 | 4,9 | 5,3 | 5,4 |
| 4 h | 9,2 / 4,5 | 7,5 | 9,3 | 8,1 | 6,8 |
| 6 h | 18,1 / 7,2 | 15,9 | 16,5 | 12,5 | 7,7 |
| 8 h | 23,9 / -- | 21,5 | 24,2 | 19,1 | 9,8 |
| 24 h | 33,4 / 20,6 | 34,0 | 32,2 | 32,1 | 25,7 |
| 2 d | 37,5 / 36,4 | 37,0 | 37,2 | 35,9 | 27,7 |
| 7 d | 40,6 / -- | 42,3 | 41,2 | 39,1 | 32,6 |
| 28 d | 48,0 / -- | 47,9 | 49,8 | 47,0 | 38,6 |

**Tabelle 2**

| (gehört zu Bild 2) | | |
|---|---|---|
| Zusammensetzung: | Massen-% | |
| Mischung | A | B |
| Portlandzement | 92,45 | 96,26 |
| Tonerdezement | 4,7 | 1,9 |
| Natriumcarbonat | 0,5 | 0,4 |
| Natriumsulfat | 0,3 | 0,2 |
| Calciumhydroxid | 1,6 | 0,8 |
| Lithiumcarbonat | 0,05 | 0,02 |
| KNa-tartrat | 0,20 | 0,02 |
| Calcium-Ligninsulfonat | 0,20 | 0,40 |
| Summe | 100,00 | 100,00 |

## Patentansprüche

1. Schnellerhärtendes, hydraulisches Bindemittel, enthaltend Calciumsilikatzemente, insbesondere Portlandzement, reaktive Calciumaluminate, insbesondere Tonerdezement sowie gegebenenfalls an sich bekannte Zusatzstoffe und/oder Zuschläge,
gekennzeichnet durch einen Gehalt an:
a) 0,1 bis 2,0 Masse-% eines organischen und/oder anorganischen Beschleunigers für die Hydratation der Calciumsilikate,
b) 0,10 bis 2,00 Masse-% eines organischen und/oder anorganischen, die Hydratation der Calciumsilikate hemmenden Erstarrungsverzögerers, gegebenenfalls mit verflüssigender Wirkung,
c) 0,01 bis 0,05 Masse-% eines organischen und/oder anorganischen Erstarrungsbeschleunigers für Calciumaluminathydrate und
d) 0,01 bis 0,20 Masse-% eines Hemmers bezüglich der Bildung der Calciumaluminiumsulfathydrate.

2. Schnellerhärtendes, hydraulisches Bindemittel nach Anspruch 1,
gekennzeichnet durch einen Gehalt an:
92,45 Masse-% Calciumsilikatzement
4,7 Masse-% Tonerdezement
0,5 Masse-% Alkalicarbonat
0,3 Masse-% Alkalisulfat
1,6 Masse-% Calciumhydroxid
0,05 Masse-% eines anorganischen Erstarrungsbeschleunigers für Calciumaluminathydrate
0,20 Masse-% eines organischen, insbesondere die Hydratation der Calciumaluminatsulfate hemmenden Erstarrungsverzögerers
0,20 Masse-% eines organischen, insbesondere die Hydratation der Calciumsilikate hemmenden Erstarrungsverzögerers, gegebenenfalls mit verflüssigender Wirkung.

3. Schnellerhärtendes, hydraulisches Bindemittel nach Anspruch 1,
gekennzeichnet durch einen Gehalt an:
98,1 - 99,1 Masse-% Calciumsilikatzement
0,5 - 1,5 Masse-% Alkalicarbonat
0,1 - 0,4 Masse-% eines organischen, insbesondere die Hydratation der Calciumsilikate hemmenden Erstarrungsverzögerers, gegebenenfalls mit verflüssigender Wirkung.

4. Schnellerhärtendes, hydraulisches Bindemittel nach Anspruch 1,
dadurch gekennzeichnet,
daß es besteht aus:
95 - 5 Masse-% des Bindemittels nach Anspruch 2 und
5 - 95 Masse-% des Bindemittels nach Anspruch 3.

5. Bindemittel nach mindestens einem der Ansprüche 1 - 4,
dadurch gekennzeichnet,
daß es einen solchen Tonerdezement enthält, der im Sinter- oder Schmelzverfahren hergestellt wurde und einen Al₂O₃-Gehalt zwischen 40 und 80 % aufweist.

6. Bindemittel nach mindestens einem der Ansprüche 1 - 5,
dadurch gekennzeichnet,
daß der organische, insbesondere die Hydratation der Calciumaluminatsulfate hemmende Erstarrungsverzögerer aus Oxycarbonsäure, z. B. Weinsäure oder Zitronensäure und/oder leicht wasserlöslichen Salzen dieser Oxycarbonsäuren, z. B. aus Alkalisalzen besteht.

7. Bindemittel nach mindestens einem der Ansprüche 1 - 5,
dadurch gekennzeichnet,
daß die, insbesondere die Hydratation der Calciumsilikate hemmenden Erstarrungsverzögerer aus mindestens einem Salz der Ligninsulfonsäure, insbesondere aus Calciumligninsulfonat bestehen.

## Claims

1. Quick-setting, hydraulic binder containing calcium silicate cements, in particular Portland cement, reactive calcium aluminates, in particular aluminous cement, and if necessary, already known additives and/or aggregates,
characterised by a content of:
a) 0.1 to 2.0 % by weight of an organic and/or inorganic accelerator for the hydration of the calcium silicates,
b) 0.10 to 2.00 % by weight of an organic and/or inorganic setting retarder inhibiting the hydration of the calcium silicates, if necessary with a liquefying effect,
c) 0.01 to 0.05 % by weight of an organic and/or inorganic setting accelerator for calcium aluminate hydrates and
d) 0.01 to 0.20 % by weight of an inhibitor with regard to formation of the calcium aluminium sulphate hydrates.

2. Quick-setting hydraulic binder according to claim 1,
characterised by a content of:
92.45 % by weight calcium silicate cement
4.7 % by weight aluminous cement
0.5 % by weight alkali carbonate
0.3 % by weight alkali sulphate
1.6 % by weight calcium hydroxide
0.05 % by weight of an inorganic setting accelerator for calcium aluminate hydrates
0.20 % by weight of an organic setting retarder inhibiting in particular the hydration of the calcium aluminate sulphates
0.20 % by weight of an organic setting retarder inhibiting in particular the hydration of the calcium silicates, if necessary with a liquefying effect.

3. Quick-setting hydraulic binder according to claim 1,
characterised by a content of:
98.1 - 99.1 % by weight calcium silicate cement
0.5 - 1.5 % by weight alkali carbonate
0.1 - 0.4 % by weight of an organic setting retarder inhibiting in particular the hydration of the calcium silicates, if necessary with a liquefying effect.

4. Quick-setting, hydraulic binder according to claim 1,
characterised in that
it consists of
95 - 5 % by weight of the binder according to claim 2 and
5 - 95 % by weight of the binder according to claim 3.

5. Binder according to at least one of claims 1 - 4,
characterised in that
it contains an aluminous cement manufactured by the sintering or melting process and with an Al₂O₃ content between 40 and 80%.

6. Binder according to at least one of claims 1 - 5,
characterised in that
the organic setting retarder inhibiting in particular the hydration of the calcium aluminate sulphates consists of oxycarboxylic acid, e.g. tartaric acid or citric acid, and/or readily water-soluble salts of these oxycarboxylic acids, e.g. alkali salts.

7. Binder according to at least one of claims 1 - 5,
characterised in that
the setting retarders inhibiting in particular the hydration of the calcium silicates consist of at least one salt of lignin sulphonic acid, in particular calcium lignin sulphonate.

## Revendications

1. Liant hydraulique à prise rapide contenant des ciments au silicate de calcium, en particulier des ciments Portland, des aluminates de calcium, en particulier du ciment alumineux ainsi que, le cas échéant, des granulats et/ou adjuvants en principe connus, caractérisé en ce qu'il présente les teneurs suivantes dans sa masse:
a) 0,1 à 2,0 % d'un activateur d'hydratation des silicates de calcium de nature organique et/ou minérale,
b) 0,10 à 2,00 % d'un retardateur de prise empêchant l'hydratation des silicates de calcium, de nature organique et/ou minérale, le cas échéant avec action liquéfiante,
c) 0,01 à 0,05 % d'un activateur de prise des aluminates de calcium hydratés de nature organique et/ou minérale et
d) 0,01 à 2,00 % d'un retardateur de formation des sulfates de calcium alumineux hydratés.

2. Liant hydraulique à prise rapide selon la revendication 1, caractérisé en ce qu'il présente les teneurs suivantes:
92,45 % de la masse de ciment Portland
4,7 % de la masse de ciment alumineux
0,5 de la masse de carbonate alcalin
0,3 de la masse de sulfate alcalin
1,6 de la masse d'hydroxyde de calcium
0,05 de la masse d'un activateur de prise minéral pour aluminates de calcium hydratés
0,20 de la masse d'un adjuvant organique de retard de prise, en particulier des aluminates de calcium sulfatés
0,20 de la masse d'un adjuvant organique de retard de prise pour ralentir en particulier l'hydratation des silicates de calcium, le cas échéant avec action fluidifiante.

3. Liant hydraulique à prise rapide selon la revendication 1, caractérisé en ce qu'il présente les teneurs suivantes dans la masse:
98,1 - 99,1 % de ciment de silicate de calcium
0,5 - 1,5 % de carbonate alcalin
0,1 - 0,4 % d'un adjuvant organique de retard de prise pour ralentir en particulier l'hydratation des silicates de calcium, le cas échéant avec action fluidifiante.

4. Liant hydraulique à prise rapide selon la revendication 1, caractérisé en ce qu'il est composé dans sa masse de:
95 - 5 % de liant selon revendication 2 et de
5 - 95 % de liant selon la revendication 3.

5. Liant selon au moins une des revendications 1 - 4, caractérisé en ce qu'il contient un ciment alumineux obtenu par frittage ou fusion et ayant une teneur en Al2 O3 comprise entre 40 et 80 %.

6. Liant selon au moins une des revendications 1 - 5, caractérisé en ce que l'adjuvant de retard de prise organique empêchant en particulier l'hydratation des aluminates de calcium sulfatés est constitué par un acide carboxylique, tel que de l'acide tartrique ou de l'acide citrique et/ou des sels facilement solubles de ces acides carboxyliques.

7. Liant selon au moins une des revendications 1 - 5, caractérisé en ce que les adjuvants de retard de prise, en particulier ceux retardant l'hydratation des silicates de calcium, sont constitués d'au moins un sel d'acide sulfolignique, en particulier de lignosulfonate de carbone.
